# EUROPEAN PATENT APPLICATION

(11) **EP 4 663 314 A1**
(43) Date of publication of application: **17.12.2025**
(21) Application number: 25181880.3
(22) Date of filing: 10.06.2025
(51) Int. Cl.: B09B 3/30, A24C 5/36, B09B 5/00, B29B 17/02, B29B 17/04, C08L 1/12, B29B 17/00, B09B 101/75, B29K 1/00, B29K 105/12

(54) **METHOD FOR RECYCLING AND DISPOSAL OF CIGARETTE BUTTS AND SIMILAR ITEMS**

(30) Priority: 12.06.2024 IT 202400013423
(71) Applicant: Human Maple S.r.l.s., 41013 Castelfranco Emilia (MO) (IT)
(72) Inventor: Benkouhail, Ali, 41013 Castelfranco Emilia (MO) (IT); Boccia, Marco, 41013 Castelfranco Emilia (MO) (IT); Villano, Mario, 41013 Castelfranco Emilia (MO) (IT); Brusa, Alessandro, 41013 Castelfranco Emilia (MO) (IT)
(74) Representative: Bottino, Giovanni

(57) **Abstract**

Method for recycling and disposing of cigarette butts and similar items, comprising the following steps:
- drying the butts (2);
- breaking up the butts (5);
- separating (3) the tobacco (15) and ash (25) contained in the butts;
- shredding (6) the butts with the tobacco and ash removed;
- separation (7, 7') of the shredded paper fraction (27) and any PLA (37) present from the shredded cellulose acetate fiber;
- washing (8) of the acetate fiber;
- drying (10) of the washed acetate fiber.

## Description

The present invention relates to a method for treating waste, and in particular to a method for recycling and disposing of waste; more specifically, it relates to a method for recycling and disposing of cigarette butts and the like.

Since the second half of the last century, filters have been widely introduced into cigarettes, mainly to reduce the harmful impact of tobacco combustion products; The filter, which was previously made of paper or cardboard, is generally made of a cellulose acetate pad, a semi-synthetic polymer derived from cellulose recovered from vegetable fiber waste in the textile, paper, and wood industries.

Cigarette butts can be considered the most significant type of human waste in terms of quantity, given that it is estimated that more than 5,000 billion cigarette butts are dumped carelessly every year worldwide. The main components of this waste are tobacco, ash, paper, and cellulose acetate, in addition to combustion residues that accumulate in the filter and tobacco. Among these, particular mention should be made of harmful and toxic substances such as cyclic and polycyclic aromatic compounds, such as phenol, toluene, and benzopyrenes, formaldehyde, acetone, and, of course, nicotine, as well as numerous heavy metals.

The management of this waste is complicated by the fact that the vast majority of cigarette butts are discarded in the environment, which means that while paper and tobacco degrade in a reasonably short time, cellulose acetate takes much longer to degrade and, above all, releases the above-mentioned toxic or toxic-harmful substances into the environment, particularly into water, significantly altering the environmental balance.

This problem has been the subject of research for several years now, and technologies have been developed to manage the recycling of cellulose acetate in particular. Specifically, document 102019000002915 describes a method for recycling cellulose acetate from cigarette butts, which involves separating the filters from the other components of the waste, mainly by washing with water and/or aqueous solutions, and melting them into a homogeneous thermoplastic mass for molding or spinning.

Similarly, document 102020000003745 describes a method for recycling cellulose acetate from used cigarette filters, which involves dissolving the polymer in a solvent, separating it from the other components of the cigarette butts, precipitating it using an antisolvent, and removing the pollutants.

Both methods mentioned above aim to recover cellulose acetate for subsequent processing from the regenerated polymer; however, in both cases, too much attention is focused on the polymer fiber that makes up the filter, and not on all the components of the cigarette butt, which make up about 70% by weight compared to 30% for the filter alone. Furthermore, the treatment methods and materials used are not specifically designed to minimize environmental impact, which in this case, given the significant proportions of this waste, should be a central concern.

The aim of this invention is therefore a method for recycling and disposing of cigarette butts and similar items, which is designed to enable the recycling of all components of cigarette butts, both those intended for combustion and those more recently used for heating, using operating conditions and materials with the lowest possible environmental impact. Among heating cigarettes, Terea^{®} should be considered carefully, as they contain a metal foil used for the induction heating of the tobacco mixture they contain; in addition, Heets^{®}, the other type of heated cigarette, do not contain metal but instead have a PLA (polylactate) membrane, which must also be taken into account in the recycling process.

The object of the present invention is therefore a method for recycling and disposing of cigarette butts and similar items, comprising the following steps:
- drying the cigarette butts;
- breaking up the cigarette butts;
- separating the tobacco and ash contained in the cigarette butts;
- shredding the cigarette butts after removing the tobacco and ash;
- separating the shredded paper fraction and any PLA present from the shredded cellulose acetate fiber;
- washing the acetate fiber;
- drying the washed acetate fiber.

The drying step can be carried out either at ambient conditions or using appropriate forced ventilation means.

The cigarette butt disintegration phase is carried out by mechanical agitation, in particular with a ball mill or similar, and is performed to facilitate the separation of the cigarette butt components.

In one embodiment, a phase for separating cigarette butts containing metallic material is provided, carried out by means of a magnetized conveyor line; the butts collected in this way are first separated by screening from the metal sheets detached during the breaking-up phase; they are then shredded and passed again through the magnetized conveyor line to separate the metal sheets from the shredded butts and tobacco, which are returned to the main processing line.

The shredding is preferably carried out with a grinding mill, or alternatively with a blade mill. The paper fraction is separated by blowing air onto the shredded semi-finished product and separating the paper fragments and acetate fiber with at least one screen.

The washing of the fiber obtained after separation from the paper fraction is repeated a given number of times, and the washing liquid is distilled in order to separate the pollutants present in the fiber and reused for subsequent washings. The washing liquid is preferably ethanol, and in particular denatured ethanol at a concentration of 70% to 90% is used.

Further advantages and features of the method according to the present invention will become apparent from the following description of an embodiment thereof, by way of not limiting example, with reference to the single attached drawing, in which:

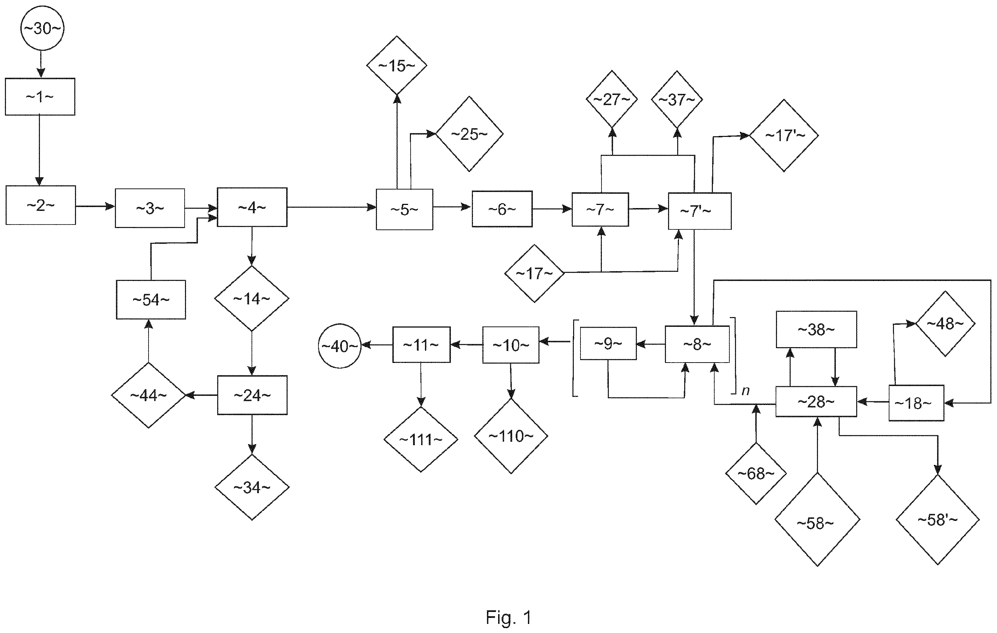

Figure 1 is a flow diagram of the operation of the plant implementing an embodiment of the method according to the present invention.

Figure 1 schematically illustrates the system that implements an embodiment of the method according to the present invention; cigarette butts 30 are primarily inspected (1) to remove any coarse foreign matter and, simultaneously or subsequently, are placed to dry (2) on large surfaces. As mentioned in the introduction, although this type of waste mainly consists of traditional cigarette butts, i.e., those used by burning the tobacco and the paper that wraps it, the method of the present invention is also suitable for recycling cigarettes that are used with heating devices, such as Heets^{®} for the Iqos^{®} system, or Terea^{®} for the Iqos Iluma system. Optionally, the surfaces on which drying takes place can be heated or blown with hot air to speed up the process.

In the next step 3, the cigarette butts are broken up by mechanical agitation, for example using a ball mill. This operation facilitates the separation of the components of the different types of cigarette butts processed in the plant and makes the subsequent stages easier.

Stage 4 involves the use of a magnetized roller to remove cigarette butts containing magnetizable metal foils, i.e., Terea^{®} cigarette butts, from the processing line and treat them appropriately. The roller attracts both the scrap containing the sheets and any sheets already released during the previous dismantling phase; this mixture is then subjected to a vibrating screen (24), which separates the sheets, which are recovered in (34), from the butts (44), which are then shredded (54) and returned to the magnetic roller, where the strips released by the shredding are collected as described above, while the shredded Terea^{®} product is sent to the next processing stage together with the other butts.

In phase 5, the tobacco (15) and ash (25) are separated from the cigarette butts using a vibrating screen. At this point, the tobacco and ash can be stored and reused as fertilizers or soil improvers in agriculture without undergoing further treatment. The cigarette butts now consist of the filter portion, wrapped in paper, and the residual portion of the paper, with the tobacco removed.

Shredding (6) is carried out to increase the surface area of the filter, which is useful for the washing phase (8) that follows, and to separate the paper component from the polymeric fiber component. Preferably, the shredding is carried out using grinding wheels, balls, or blades. The shredded product is fed successively into two separation containers consisting of chambers (7, 7') into which air (17) is blown and then discharged into 17', and equipped with screening means capable of retaining the fibrous material, at this stage in the form of flakes of substantially uneven size, and of releasing first the PLA (37) present from the processing of Heets, which is heavier, and then the paper fraction (27), consisting of small and medium-sized fragments; the screen in chamber 7' preferably has smaller meshes than the screen in chamber 7. The PLA 37 and the paper fraction 27 can be sent independently to recycling.

Next, the fibrous component of the filters is fed (8) into the washing chamber, which is designed to allow the fibrous material to be pressed (9) after each rinse. Alternatively, pressing could be replaced by centrifugal squeezing. In general, efforts have been made to use a limited amount of washing liquid, preferring instead to repeat the washing several times.

The washing liquid (68), which is specifically 75% denatured ethanol, is collected after each rinse and sent for distillation (18) in a parallel line; the distillation residues (48) are then removed. These contain the pollutants present in the cigarette butt filters and must be treated as special waste, but in fact constitute the only true non-recyclable waste generated in this process. The washing liquid is treated (28) with a drying agent (58), which is preferably a molecular sieve, and in particular a 3A molecular sieve, i.e., a molecular sieve consisting of a zeolite or similar, capable of trapping molecules up to 3 Angstroms in size. The drying agent is in turn treated in oven 38 to be made available for reuse (58'). Periodically, washing liquid 66 is added to compensate for losses due to the various stages of the washing process, which in any case provides for its reuse in an amount of not less than 90%. At least three washes have been considered for each load of ground filters. The choice of washing liquid is based on the fact that ethanol is a good solvent for most of the substances retained by the filter fiber, while it is unable to solubilize the fiber itself. In addition, it has a relatively low boiling point, which therefore allows energy costs for its recycling to be kept low.

After the last wash, the staple fiber is spread out to dry (10) to remove (110) any remaining washing liquid. this drying phase, like the one carried out at the beginning of the process, may also involve the use of a hot air stream, which is also useful to prevent the fibrous material from reabsorbing water due to its high hygroscopicity.

After a final inspection phase (11), carried out by operators through direct observation or using appropriate visualization means, and aimed to eliminate any residues (111), the final product 40, consisting of cellulose acetate flakes, is ready for use, which may include use as padding in clothing, or spinning to obtain a workable yarn.

The recycling and disposal method according to the present invention allows, by simple means and under mild operating conditions, and therefore with a significantly reduced environmental impact, cigarette butts and the like to be separated into their main components, namely cellulose acetate, paper, tobacco, and ash, allowing all these components to be recycled, while at the same time allowing the separation of pollutants for their elimination.

Given that, as mentioned in the introduction, the percentage by weight of this waste consisting solely of cellulose acetate is in the order of 30%, the method of the present invention has not been focused solely on the recovery of this material, but has instead been developed to allow the separation of all recyclable components of this waste and the easy disposal of pollutants.

## Claims

1. Method for recycling and disposing of cigarette butts and similar items, comprising the following steps:
- drying the butts (2);
- breaking up the butts (3);
- separation (5) of the tobacco (15) and ash (25) contained in the butts;
- shredding (6) of the butts stripped of tobacco and ash;
- separation (7, 7') of the shredded paper fraction (27) and any PLA (37) present from the shredded cellulose acetate fiber;
- washing (8) of the acetate fiber with a suitable liquid;
- drying (10) of the washed acetate fiber.

2. Method according to claim 1, wherein the drying step (2) is carried out under ambient conditions.

3. Method according to claim 1, wherein the drying step (2) is carried out using suitable means of forced ventilation.

4. Method according to any one of the preceding claims 1 to 3, wherein the breaking up step (3) comprises mechanical agitation to promote the separation and detachment of the components of the cigarette butts.

5. Method according to any one of the preceding claims 1 to 4, wherein the grinding (6) is preferably carried out with a grinding wheel, and alternatively with a blade grinder.

6. Method according to any one of the preceding claims 1 to 5, wherein the separation (7, 7') of the paper fraction and the PLA is carried out by blowing air onto the shredded semi-finished product and separating the paper and PLA fragments from the acetate fiber using at least one screen.

7. Method according to any one of the preceding claims 1 to 6, wherein the washing (8) of the fiber obtained after separation from the paper fraction and **PLA** is repeated a given number of times, and the washing liquid is distilled (18) so as to separate the pollutants (48) present in the fiber, and reused for subsequent washings.

8. Method according to claim 7, wherein the washing liquid is treated (28) with a drying agent (58), which is preferably a molecular sieve.

9. Method according to any of the preceding claims 1 to 8, wherein the washing liquid (68) is ethanol, and in particular denatured ethanol at a concentration of 70% to 90% is used.

10. Method according to any of the preceding claims 1 to 8, wherein between the disassembly stage (3) and the separation stage (5) of ash and tobacco, there is a separation stage (4) of cigarette butts (14) containing magnetizable metal material, carried out by means of a magnetized conveyor line; the cigarette butts thus collected are first separated by screening (24) from the metal sheets (34) detached in the disassembly phase; then, the stubs (44) are shredded (54) and again passed through the magnetized conveyor line, so as to separate the metal sheets (34) from the shredded stubs, which are returned to the main processing line.
